# EUROPEAN PATENT SPECIFICATION

(11) **EP 3 634 744 B1**
(45) Date of publication and mention of the grant of the patent: **14.02.2024**
(21) Application number: 18813835.8
(22) Date of filing: 04.06.2018
(51) Int. Cl.: B32B 15/14, B32B 27/00, B32B 11/00, B32B 5/02, B32B 5/08, B32B 7/06, B32B 7/12, B32B 7/14, B32B 27/10, B32B 27/12, B32B 27/32, B32B 29/00

(54) **VAPOR IMPERMEABLE FLOORING UNDERLAYMENT**
DAMPFUNDURCHLÄSSIGE BODENBELAGSUNTERLAGE
SOUS-COUCHE DE REVÊTEMENT DE SOL IMPERMÉABLE À LA VAPEUR

(30) Priority: 05.06.2017 US 201762515521 P
(43) Date of publication of application: 15.04.2020
(73) Proprietor: TRAXX Corporation, Pomona, CA 91766 (US)
(72) Inventor: RANGANATHAN, Anandakumar, Lexington, MA 02421 (US); WIERCINSKI, Robert A., Lincoln, MA 01773 (US); SETH, Jyoti, Andover, MA 01810 (US)
(74) Representative: J A Kemp LLP
(86) International application number: PCT/US2018/035829
(87) International publication number: WO 2018/226572

(56) References cited:
- WO-A1-2007/021653
- WO-A1-2016/094395
- WO-A1-2017/031359
- US-A- 5 487 929
- US-A- 5 496 615
- US-A1- 2006 032 170
- US-A1- 2008 087 370
- US-A1- 2008 115 444
- US-A1- 2013 084 419
- US-A1- 2014 000 202
- US-A1- 2017 136 731
- US-B2- 8 609 213

## Description

### Field of the Invention

The present invention relates to flooring materials, and more particularly to a flooring underlayment membrane having a water-vapor impermeable polymer layer, a coated non-woven layer on one side of the water-vapor impermeable polymer layer, and a pressure sensitive adhesive layer partially coated onto the other side of the water-vapor impermeable polymer layer, the partial coating being covered by a release layer.

### Background of the Invention

The term "flooring" generally includes any decorative and/or wearing material placed over a floor to provide a walking surface. For purposes of the present invention, floor coverings will include but not be limited to the following covering materials: carpeting, carpet tiles, area rugs, resilient flooring covers such as linoleum or vinyl tile or sheeting, hardwood flooring, engineered wood flooring, ceramic tile, stone, terrazzo, and the like.

When a floor covering is installed over concrete or other porous material, moisture may seep upwards by capillary action through pores of the concrete. This is particularly the case in slab-on-grade or below-grade applications. The moisture will tend to collect between the concrete and the floor covering, and, over time, the moisture may have deleterious effects on the covering material as well as the adhesive used for attaching the floor covering to the concrete.

The moisture and alkalinity of the concrete can give rise to microbial growth and de-bonding of the covering material from the floor, increasing deterioration and damage risks.

One solution to preventing damage to floor coverings from moisture and alkalinity is to apply a protective moisture barrier beneath the floor covering. Various types of materials are used as flooring protection. The use of epoxy resin coatings are quite popular, but they have several key shortcomings. The primary shortcoming is that one will need to remove the epoxy coating (e.g., by sanding the floor to ensure complete removal and levelness of the floor) each time the floor covering needs to be replaced. Another shortcoming of the epoxy coating is the phenomenon referred to as "blush" which is caused by water accumulating at the interface between concrete and epoxy coating.

The second major solution to preventing floor cover damage is to use an underlayment such as a rollable membrane. The simplest and most common type of rollable flooring underlayment is a polyethylene film. However, a polyethylene film has several shortcomings: one of which is due to its poor dimensional stability, and the second of which is due to incompatibility with many adhesives used for attaching coverings to the floor.

In US Patent 6,673,432 (assigned to Elk Premium Building Products), Matti Kiik et al. disclosed a floor underlayment having excellent dimensional stability which was installed upon the floor using a complex adhesive taping process. This patent disclosed a structural article comprising a substrate having an ionic charge coated on one side with a coating having essentially the same ionic charge and covered on the other side with a water vapor impermeable material selected from metal foils and preformed plastic films. The coating consisted essentially of a filler material and a binder material, and the binder material bonded the filler material together and to the substrate. In additional embodiments, the substrate was coated on both sides with a coating having essentially the same ionic charge and the article so coated was then covered on one or both sides with the water vapor impermeable material. (See Abstract).

The water vapor barrier product disclosed in US Patent 6,673,432 was sold under the VERSASHIELD^{®} brand name. For over fifteen years, the product was commercially installed on concrete floors by trained applicators using a complex, time-consuming taping process.

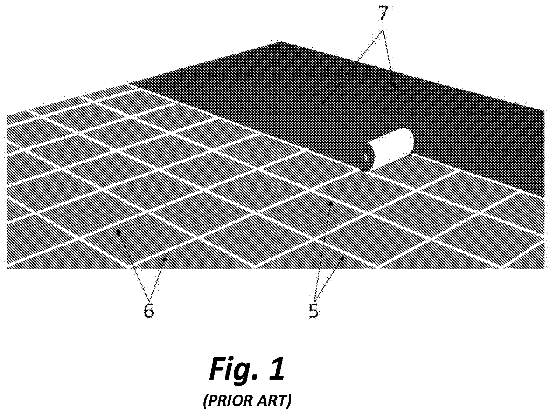

As illustrated in Fig. 1, the PRIOR ART process involved applying first a four-inch wide two-sided tape to the floor in spaced apart but parallel rows (designated as at 5) to correspond with the longitudinal edges of the rollable flooring underlayment membranes (designated as at 7), and then applying separate pieces of the four-inch wide two-sided tape at uniformly spaced apart intervals (as designated at 6). The installed tapes (6/7) represented a grid pattern (Fig. 1) upon which the flooring underlayment rolls 7 are installed and attached by unrolling the underlayment onto two-sided tapes in a particular sequence involving sequential removal of release liner from the tape.

For membranes which measure three to five feet in width, this prior art taping method is labor-intensive. First, the applicator installs a two-sided tape (designated at 5) on the floor to correspond with the lengthwise edges of the underlayment 7. Next, the applicator must install another set of two-sided tape pieces (designated at 6) across the width direction in a spaced fashion to guarantee the even distribution of shear forces imposed by foot and cart traffic on the flooring. The applicator then removes release paper from the upward face of the longitudinally extending two-sided tape 5; and then, parallel to one side of the underlayment 7, the applicator must attach the underlayment to the exposed adhesive 5. The applicator then folds the underlayment back on itself so that release liner may be removed from the top of each of the cross direction tapes 6. The applicator then folds the underlayment back onto these cross directional tapes and adheres the underlayment to the tapes 6. Finally, the applicator removes the release liner from the other side of the underlayment and adheres the underlayment to the exposed tape adhesive.

The grid-taping pattern imposed a rigorous duty of care and precision upon applicators on the job site. This is due in part to the aesthetic requirements of matching and seaming together the individual underlayment membranes at their longitudinal edges. More significantly, the grid-taping routine required care and precision in order for the underlayment satisfactorily to resist lateral movement due to shear loads. Forklifts, electric carts, patient beds, furniture, and other loads impose severe multi-direction shear loads daily on the underlayment.

Hence, the present inventors believe that there is a long felt need for a vapor impermeable flooring underlayment that resists severe shear loads including lateral movement while also providing for convenient removal when it comes time to replace the flooring/underlayment assembly.

WO 2016/094395 discusses a flooring assembly comprising at least one vertically lapped fibrous material layer, at least one pressure sensitive adhesive layer including a flexible substrate, a mesh and an adhesive located along the flexible substrate, and at least one moisture impermeable membrane layer.

In the following description the following unit equivalences apply: 1 mil= 25.4 micrometers; 1 inch= 2.54 cm; 1 pound= 0.454 Kg; 1 square foot= 0.0929 m².

### Summary of the Invention

In surmounting the disadvantages of the prior art, the present invention provides an improved water vapor impermeable flooring underlayment membrane which comprises a water-vapor impermeable polymer layer (e.g., polyolefin polymer), a coated non-woven layer on one side of the polymer layer, and a pressure sensitive adhesive layer partially coated onto the other side of the polymer layer, the partial pressure sensitive adhesive coating being covered by a release layer. The coating layer of the coated non-woven layer comprises a synthetic polymer binder chosen from acrylics, acrylic vinyl chloride copolymers, polyvinyl chloride, polychloroprene, SBR, ethylene vinyl acetate, aqueous polyurethane emulsions, polyvinyl acetate, and mixtures thereof. The coating layer further comprises at least one filler chosen from calcium carbonate, fly ash, slag, ceramic spheres, glass spheres, alumina trihydrate, talc, amorphous silica, and mixtures thereof.

The invention also thus provides a convenient method for installation of the water vapor impermeable flooring underlayment membrane onto the floor surface, which involves removing the release layer and unrolling the underlayment membrane into place without having to pre-install an elaborate two-sided tape box grid pattern onto the floor before and/or during installation of the underlayment, as has been required for almost two decades.

In some exemplary embodiments, a one to six inch band along each of the longitudinal edges of vapor impermeable polymer layer is left uncoated, so that a two-sided pressure sensitive adhesive tape with release liner (and more preferably a split liner) can be used at the application site, to adhere the underlayment to the floor and create tight edge-to-edge seams between adjacently installed underlayment membranes.

A method for making the underlayment membranes is also described in detail herein. For example, the method comprises coating a highly filled synthetic binder onto one face of a nonwoven layer, and attaching or laminating a vapor impermeable polymer layer onto the other face of the nonwoven, and then partially coating a pressure sensitive adhesive onto the vapor impermeable polymer layer side.

In addition to facilitating and expediting installation, the invention provides excellent resistance to shear forces in all directions of travel across the installed flooring underlayment assembly, as well as ease of adhesive removal when it comes time to remove the flooring and underlayment from the floor and to replace them with new flooring and underlayment.

### Brief Description of Drawings

Further advantages and features of the present invention may be more readily comprehended when the following detailed description of preferred embodiments is taken in conjunction with the appended drawings wherein
Fig. 1 is a perspective diagram of the PRIOR ART installation method wherein two-sided tape is positioned by applicators in a grid pattern on a floor before installation of subfloor-covering underlayment;
Fig. 2 is a cross-sectional plan view illustration of exemplary water vapor impermeable flooring underlayment membranes of the present invention;
Fig. 3 is an illustration of three partial coating pressure sensitive adhesive layer patterns for water vapor impermeable flooring underlayment membranes of the present invention;
Fig. 4 is an illustration of another three partial coating pressure sensitive adhesive layer patterns for water vapor impermeable flooring underlayment membranes of the present invention;
Fig. 5 is an illustration of an exemplary partial coating pressure sensitive adhesive layer pattern achieved using a puddle coating method;
Fig. 6 is a perspective diagram of a method for installation of water vapor impermeable flooring underlayment membrane of the present invention wherein a portion of the split releasable liner is removed from the underlayment;
Fig. 6A is an illustration of an exemplary water vapor impermeable flooring underlayment membrane with a partial coating pressure sensitive adhesive layer pattern and with adhesive coated side edge bands, and further having a releasable liner which is split in the middle into two sections;
Fig. 6B is an illustration of another exemplary water vapor impermeable flooring underlayment membrane with a partial coating pressure sensitive adhesive layer pattern but without adhesive coated side edge bands, wherein the partial adhesive coating is narrower than the membrane by one to six inches, and further having a releasable liner that is wide enough to cover the adhesive coated portion and that is split (or perforated to facilitate splitting) into two sections; and
Fig. 6C is an illustration of another exemplary water vapor impermeable flooring underlayment membrane with a partial coating pressure sensitive adhesive layer pattern, but without adhesive coated side edge band, wherein the partial coating is narrower than the membrane by one to six inches, and further wherein the releasable liner is wide enough to cover the adhesive coated section and is a single piece without being split in the middle.

### Detailed Description of Exemplary Embodiments

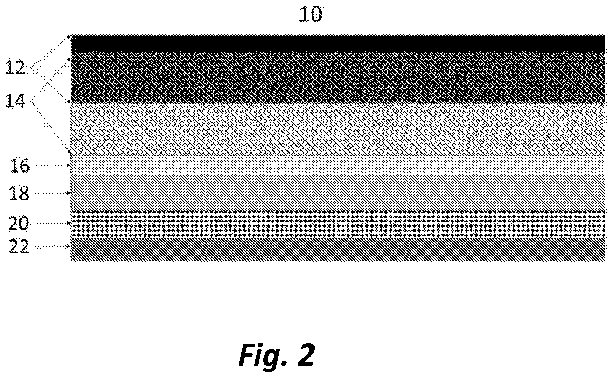

As shown in Fig. 2, a first aspect of the invention is a vapor impermeable flooring underlayment membrane (designated at 10) which comprises a water-vapor impermeable polymer layer 18 having opposite first and second sides; a coated non-woven layer (whereby the coating is designated as at 12 and the nonwoven is designated at 14) attached to a first side of the water-vapor impermeable polymer layer 18 with optional laminating adhesive layer 16; and a pressure-sensitive adhesive layer (designated as at 20) on the second side of the water-vapor impermeable polymer layer 18. The pressure-sensitive adhesive layer 20 has open areas such that the membrane (10) is partially adherable to a floor (or other substrate); and further wherein the partially adherable pressure-sensitive adhesive layer 20 is protected by a removable release liner 22, such as a silicone or wax coated release paper liner. As will be discussed further below, the coating layer 12 is preferably highly filled; and the laminating adhesive layer 16 is optional when the vapor impermeable polymer layer 18 is extrusion coated onto the nonwoven layer 14.

The term "floor" means a horizontal concrete or other porous surface used for supporting traffic (e.g., walking, carts, vehicles, etc.) regardless of whether the surface is bare or covered by an intermediate cushioning material.

Fig. 2 indicates the upper and lower surfaces of the coating layer 12 and non-woven layer 14 using bracketing arrows. Fig. 2 also illustrates coating layer 12 as partially embedded into the non-woven layer 14, and the top surface of coating 12 as located above the top surface of nonwoven layer 14. However, in alternative embodiments, the coating layer 12 can be embedded beneath the top surface of nonwoven layer 14. In still further examples, the top surface of coating layer 12 may be flush with the top surface of the nonwoven layer 14. Fig. 2 also indicates the upper and lower surfaces of the nonwoven layer 14 using double (bracketing) arrows.

Preferably, the vapor impermeable flooring underlayment membrane 10 is provided in rolled form, whereby the width is 3 to 6 feet; and total thickness (of all layers 12, 14, 16, 18, and 20 as illustrated in Fig. 2) is 20 - 50 mils, and more preferably 30-40 mils.

In further examples of the first aspect of the invention (as initially described above), an optional laminating or tie-coating adhesive (16) having a thickness of 1-10 mils may be used to increase adherence of the water vapor impermeable polymer layer 18 (if layer 18 is supplied as a preformed film) to the nonwoven layer 14. Another option is to extrude the polymer layer 18 onto the nonwoven layer 14, so that the polymer layer 18 is partially embedded into the face of the nonwoven layer 14. Extrusion coating would eliminate the need for using a pre-formed film, as well as avoid a separate laminating step and need for the optional adhesive layer 16.

In a second aspect of the invention, the water vapor impermeable polymer layer 18 of the underlayment 10 comprises a polyolefin material or mixture of polyolefins. The polyolefin material or materials may be chosen from polyethylene, polypropylene, copolymers of ethylene and propylene, copolymers of ethylene and butene, copolymers of ethylene and hexene, copolymers of ethylene and octene, and mixtures thereof. Preferred among these is high density polyethylene (HDPE). The thickness of the polymer layer 18 is preferably 0.5 to 10.0 mils.

The coating layer 12 of the vapor impermeable flooring underlayment membrane 10 comprises a synthetic polymer binder. The coating layer 12 composition may be prepared using an aqueous emulsion of a synthetic polymer binder. The synthetic polymer binder is chosen from acrylics, acrylic vinyl chloride copolymers, polyvinyl chloride, polychloroprene, SBR, ethylene vinyl acetate, aqueous polyurethane emulsions, polyvinyl acetate, and mixtures thereof. Acrylic emulsions are preferred. Also preferred are acrylic emulsions that are cross-linked, such as by using a cross-linking agent, or using a polymer which is self-cross-linking. Cross-linking enhances water resistance of the polymeric binder. A preferred cross-linking agent is melamine formaldehyde resin. This resin will react with hydroxyl, carboxylic acid, and amide functional groups on the polymer.

The coating layer 12 of the vapor impermeable flooring underlayment membrane 10 comprises at least one filler chosen from calcium carbonate, fly ash, slag, ceramic spheres, glass spheres, alumina trihydrate, talc, amorphous silica, and mixtures thereof. Calcium carbonate is a preferred filler for the present invention. In further exemplary embodiments, two or more filler materials can be chosen according to desired texture, coating porosity, filler types, and particle sizes.

The coating layer 12 may comprise other components chosen from water (in addition to that contained in emulsion of synthetic polymer binder), an anti-wetting agent, pigment, silane, titinate, dispersant, defoamer, biocide, rheology modifier and thickeners, and mixtures thereof.

Exemplary coating layer 12 composition comprises, in an amount of 1% to 45% on a dry solids weight basis, of polymeric material including the synthetic polymer binder and the cross-linking agent. Generally, the cross-linking agent is to be used in amounts less than or equal to 10% by weight of the synthetic polymer binder. A preferred amount of the polymeric material is 5% to 15% on a dry solids weight basis. Fillers can comprise from about 55% to 99% of the coating on a dry solids weight basis, and, more preferably, from about 85% to 95% of the coating layer composition 12 on a dry solids basis.

In further examples, the dry weight of the coating layer 12 may be 2 to 20 pounds per 100 square feet, and, more preferably, 7 to 12 pounds per 100 square feet.

In a third aspect of the invention, which may be based on any of the first through second aspects described above, the nonwoven layer 14 of the vapor impermeable flooring underlayment membrane 10 comprises a material chosen from glass, polyamide, polyethylene terephthalate, or a combination of the foregoing materials. A mat that is made of glass fibers is most preferred. For example, the glass fibers may be used in a density of 0.5 to 10 pounds per 100 square feet, and, more preferably, 1 to 3 pounds per 100 square feet. As another example of the nonwoven layer 14, the material may be a polyamide (and/or polyester) fabric will have a coating weight in the range of 0.25 to 5 pounds per 100 square feet, and, more preferably, 0.5-2.5 pounds per 100 square feet.

In a fourth aspect of the invention, which may be based on any of the first through third aspects described above, the vapor impermeable flooring underlayment membrane 10 comprises a water-vapor impermeable polymer layer 18 which is supplied in the form of a pre-formed film, and the film is laminated to the coated non-woven layer 12/14, optionally although preferably by using a laminating adhesive 16 that comprises a polymer chosen from polyethylene, polypropylene, copolymers of ethylene and propylene, copolymers of ethylene and butene, copolymers of ethylene and hexane, copolymers of ethylene and octene, ethylene vinyl acetate, ethylene acrylic acid, and mixtures thereof. Some polyolefin adhesives are referred to as hot melt adhesives, and such hot melt adhesives generally comprise an amorphous polyolefin, tackifier, and polyolefin wax. Amorphous polyolefins suitable for use in the laminating adhesive layer 16 include commercially available amorphous polyolefins from Eastman Chemicals sold under the EPOLENE^{™} trade name. Hot melt adhesives based on ethylene vinyl acetate (EVA) are also suitable for these purposes. EVA polymers are commercially available from Du Pont under the ELVAX^{®} trade name. In exemplary embodiments, the laminating adhesive layer 16 has a thickness of 0.5 mils to 5.0 mils, and, more preferably, 1.0 mil to 2.0 mils. The laminating adhesive 16 may be applied onto the nonwoven layer 14 or disposed on the water-vapor impermeable polymer film layer 18.

In a fifth aspect of the invention, which may be based on any of the first through fourth aspects described above, the water-vapor impermeable polymer layer 18 is formed by extrusion coating (of the polymer 18) onto the coated non-woven layer 12/14. As previously discussed, the use of extrusion coating will avoid the need for a separate laminating step and laminating adhesive 16. In a further exemplary embodiment, the first coating 12 contains high levels of filler material and is first coated and/or saturated into a first side of the nonwoven layer 14; and, thereafter, the water-vapor impermeable polymer layer 18 is extrusion coated onto the second side of the nonwoven layer 14 opposite to the highly filled coating 12 side.

In an sixth aspect of the invention, which may be based on any of the first through fifth aspects described above, the partial coated pressure sensitive adhesive layer 20 of the impermeable flooring underlayment membrane 10 comprises a bituminous or non-bituminous synthetic, pressure sensitive adhesive chosen from butyl rubber based adhesives, polyisobutylene based adhesives, butyl based adhesives, acrylic based adhesives, vinyl ether based adhesives, styrene-isoprene-styrene (SIS) based adhesives, styrene-ethylene-butylene-styrene (SEBS) based adhesives, styrene-butadiene-styrene (SBS) based adhesives, styrene-butadiene rubber (SBR) based adhesives, and combinations thereof. As an example, the synthetic adhesive is a pressure sensitive hot melt adhesive block copolymer of SIS, SBS or SEBS; or, as another example, the synthetic adhesive is SIS block copolymer. For a more detailed description of pressure sensitive adhesives. See Handbook of Pressure Sensitive Adhesive Technology, by Satas (Van Nostrand Reinhold Company, Inc. 1982). Other rubbers include polyisoprene, polybutadiene, natural rubber, polychloroprene rubber, ethylene-propylene rubber, ethylene alpha olefin, nitrile rubbers, and acrylic rubber.

In other exemplary underlayments of the invention, the percentage coverage of the partial coating adhesive 20 coverage may range from 5% to 75%, and, more preferably, 10% to 30%, not including any of the area covered by any adhesive coated side edge bands (designated at 34) along the longitudinally extending edges of the membrane 10.

Other suitable non-bituminous synthetic pressure sensitive adhesives may comprise an amorphous polyolefin. The term amorphous polyolefin (APO) is defined as a polyolefin with a degree of crystallinity of less than 30% as measured by differential scanning calorimetry. Such polymers can be either homopolymer(s) of propylene or copolymers of propylene with one or more α-olefin comonomer(s), such as, for example, ethylene, 1-butene, 1-hexene, 1-octene and 1-decene. The APO polymers of the types herein described above are commercially available from Eastman Chemical Company, Kingsport, Tennessee, under the trade name EASTOFLEX"" or from Huntsman Corporation, Houston, Texas, under the trade name REXTAC^{®} or from Degussa Corporation, Parsippany, New Jersey, under the trade name VESTOPLAST^{®}. Like rubber-based adhesives, these can be mixed with tackifier and plasticizer to produce a pressure sensitive adhesive. See Eastman product bulletin "Pressure-Sensitive Adhesives Based on Amorphous Polyolefin From Eastman Chemical Company."

In a seventh aspect of the invention, which may be based on any of the first through sixth aspects described above, the non-bituminous or synthetic pressure sensitive adhesive, as may be contemplated for use in the partial coated pressure sensitive adhesive layer 20, contains at least one material chosen from light absorbers (e.g., carbon black, benzotriazoles, hydroxyphenyl-triazine, benzophenones, etc.), light stabilizers (e.g., hindered amines), antioxidants (e.g., hindered phenols), fillers (e.g., calcium carbonate, silica, titanium dioxide, etc.), plasticizers, rheological additives, and mixtures thereof. Further exemplary embodiments comprises at least two of these materials. Preferred synthetic adhesives contain, for example, a light absorber, light stabilizer, and an antioxidant.

As previously mentioned, a bituminous adhesive may be a rubber-modified bitumen used for the partially coated pressure sensitive adhesive layer 20. The rubbers listed above (e.g., SIS, SBS, SEBS, SBR, etc.) can be blended with bitumen to produce a pressure sensitive adhesive. The rubber-modified bitumen may also include a processing oil such as an aromatic, naphthenic, or paraffinic oil. For unfilled adhesives, the amount of rubber is about 10% to 22% by weight of the adhesive; the weight percentage of the bitumen can be about 43% to 90%; and the weight percentage of the processing oil can be 0% to 35%. The pressure sensitive adhesive may also comprise at least one inorganic filler material, such as silica, calcium carbonate, talc, or clay. If present, the filler may be used in the amount of about 0% to 50% based on total weight of the partial coated pressure sensitive adhesive layer 20.

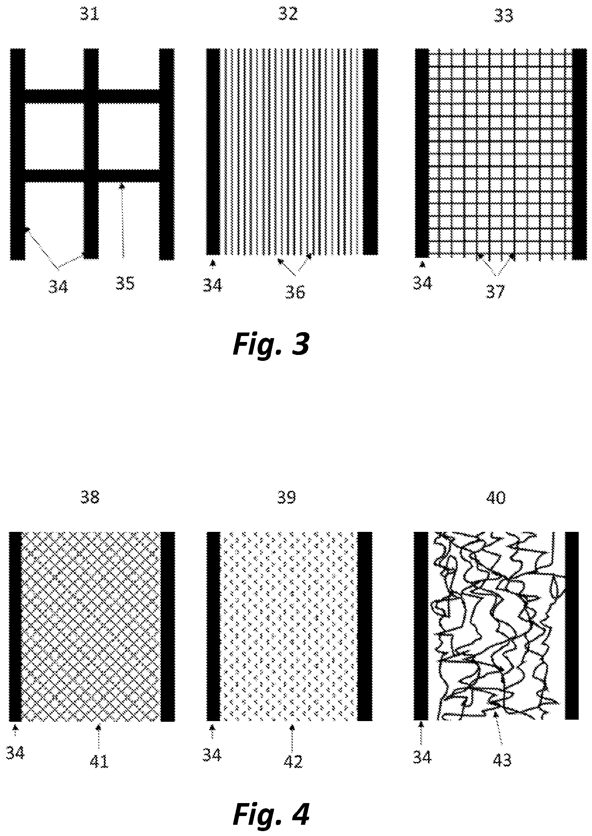

In further exemplary embodiments, the pressure sensitive adhesive layer 20 is coated partially onto the water vapor impermeable polymer layer 18 in a pattern that may be chosen from the patterns illustrated in any of Figs. 3-5. In Figs. 3-5, portions of the water vapor impermeable polymer layer 18 may be partially coated (by the pressure sensitive adhesive 20) using continuous or discontinuous patterns, or using any combination of the illustrated patterns. The possible coating patterns are not limited to these options.

For representational purposes, Figs. 3 to 5 illustrate various partial coating patterns for the pressure sensitive adhesive coating 20 wherein the width-to-width dimension is "horizontal" with respect to the page; and parallel edges along the width are illustrated as "vertical" along the up and down direction of the page. In the exemplary embodiments illustrated in Figs. 3 to 5, the width of the total adhesive pattern is the same as, or nearly the same as, the width of the vapor impermeable polymer layer (18) on which the pressure sensitive adhesive is partially coated.

A band of adhesive designated as 34 in each of the pattern variations in Figs. 3 to 5 is shown as a continuous band of pressure sensitive adhesive, which may optionally be coated onto the water vapor impermeable polymer layer (18) at the same time as the discontinuous (patterns) are applied, or it may be applied as a tape (e.g., two-sided pressure sensitive adhesive) having a releasable liner. Such tape may be installed at the manufacturing plant or at the application site before installation of the underlayment membrane upon the floor.

In Fig. 3, the partial coating pattern shown at 31 contains bands of pressure sensitive adhesive designated as at 35 perpendicularly disposed with respect to the longitudinal (or machine direction) edges of the underlayment membrane, and thus perpendicular to longitudinal bands designated at 34 (including the edge bands 34 which could be two-sided tape applied just before installation to the floor). This pattern 31 is referred to as a box-grid pattern because it resembles the prior art box-grid taping pattern described in the Background section above. The width of the adhesive cross-direction bands 35, as well as the width of edge bands 34 if applied in the manufacturing plant, may range from 1 inch to 6 inches, and, more preferably, from 2 to 4 inches. The thickness of the adhesive bands (35, 34) may be 0.5 mils to 10 mils, and, more preferably, thickness may be 2 mils to 5 mils.

The partial coating pattern shown at 32 in Fig. 3 comprises bands of pressure sensitive adhesive in the machine direction 36, and thus parallel to the edges of the underlayment and hence parallel to adhesive bands or later-applied adhesive tapes 34 along the edges. This pattern can be referred to as a parallel stripe pattern (which in the embodiment shown has narrower adhesive bands compared to the side edge bands 34 or later-applied adhesive tape 34). As an example, the narrower adhesive bands 36 may have a width from 0.01 to 4.0 inches, and an adhesive thickness of 0.5 mils to 10 mils, and, more preferably, thickness may be 2 mils to 5 mils.

The partial coating pattern shown at 33 in Fig. 3 comprises bands of pressure sensitive adhesive in both the machine and cross directions (as designated by the arrows at 37). This pattern may be referred to as a crosshatch pattern with internal crossing bands. The width and thickness of the adhesive bands or later-applied adhesive tape 34 may be as described above for the partial coating pattern shown at 31. The width of the adhesive bands 37 in the crosshatch pattern can be about 0.01 to 1 inch; and the adhesive thickness may be 0.5 mils to 10 mils, and, more preferably, thickness may be 2 mils to 5 mils.

In Fig. 4, three further partial coating patterns are shown at 38, 39, and 40. Again, for these options 38-40, the width of the total adhesive pattern is equal to or less than the width of the vapor impermeable polymer layer (18) depending upon whether the adhesive band 34 is coated onto the vapor impermeable polymer layer (18) or applied as a tape during installation of the underlayment to the floor. Alternatively, the width can be narrower by 1 to 6 inches (for each of the two longitudinal side edges), such that double-sided tape can be applied at the seams between adjacent underlayments during application.

The partial coating pattern shown at 38 in Fig. 4 comprises bands of pressure sensitive adhesive in a diamond pattern 41 that is slanted or angled with respect to the edges of the underlayment. Again, the edge bands (34) may be coated at the same time with the diamond pattern, or applied in the form of adhesive tape (34) after coating and during installation of the underlayment to the floor. The width of the slanted bands 41 in the diamond pattern is 0.1 to 1.0 inch, and thickness of the adhesive 41 may be 0.5 mils to 10 mils, and, more preferably, thickness may be 2 mils to 5 mils.

The partial coating pattern shown at 39 in Fig. 4 comprises discrete (i.e., unconnected) adhesive domains or islands (as designated at 42). These discrete regions may be of any shape such as circles, squares, alphabet letters, or irregularly shaped domains or islands that are spaced apart upon the face of the water vapor impermeable polymer layer (18). This pattern may be referred to as a discrete island pattern (Fig. 4 at 39). This pattern may be coated at the same time with the adhesive edge bands (34) if used. In further examples, the sizes of these discrete islands of adhesive may different from one another. The thickness of the adhesive domains 42 may be about 0.5 mils to 10 mils, and, more preferably, from about 2 mils to 5 mils.

The partial coating pattern shown at 40 in Fig. 4 comprises a random application of pressure sensitive adhesive that is fibrillary in appearance. This pattern may be referred to as a random fibrillary pattern (Fig. 4 at 40). Where the fibrils 43 of adhesive are applied using spinnerets or moving nozzles, it may be preferable to use two-sided pressure sensitive adhesive tape at the installation site where the underlayment is attached to the floor, instead of coating the edge adhesive 34, as coating of the edge bands 34 would appear to involve an extra step. The diameter as well as thickness of the adhesive fibrils 43 may range from 0.5 mils to 10 mils, and more preferably, thickness may be 2 mils to 5 mils.

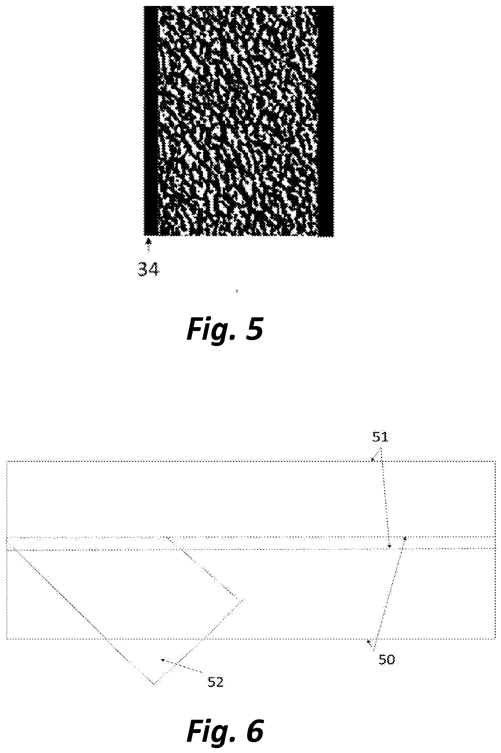

In a further exemplary embodiment, as shown in Fig. 5, the partial coated pressure sensitive adhesive layer (20 as shown in Fig. 2) is applied onto the vapor impermeable polymer layer (18 as shown in Fig. 2) using a puddle coating method. A puddle coating method will involve applying the adhesive 20 onto the vapor impermeable polymer layer 18 using an applicator roller "starved" of adhesive by an adjacent metering roller that rotates at a different speed (and that takes away some of the adhesive from the applicator roller such that only a partial adhesive coating is applied by the applicator roller). The pattern created on the water vapor impermeable polymer layer 18 is called a cascade affect, as the partial coating portion (located between the bands at 34) looks like water cascading in waves across a surface. Again, the percent adhesive coverage may range from 5% to 50%, and, more preferably, from 10% to 30% in terms of area of the water vapor impermeable polymer layer 18 being covered. The adhesive pattern can have continuous or discontinuous portions (coated area) running through open portions (uncoated areas).

Thus, in a eighth aspect of the invention, based upon any of the first through seventh aspects described above as described hereinafter, the pressure sensitive adhesive layer 20 is coated partially onto the water vapor impermeable polymer layer 18 using a pattern chosen from box grid pattern (Fig. 3 at 31), parallel stripe pattern with internal bands (Fig. 3 at 32), crosshatch pattern with internal crossing bands (Fig. 3 at 33), diamond pattern with crossing bands (Fig. 4 at 38), discrete island pattern (Fig. 4 at 39), random fibrillary pattern (Fig. 4 at 40), a cascade effect as created by using a puddle coating process (Fig. 5); or a combination of any of these patterns. Again, the edge adhesive bands 34 may be coated at the same time as the above partial coating patterns, or applied at the time of installation using a two-sided adhesive tape (which may conventionally be four to eight inches in width). It is preferred that the underlayment is provided such that the partial adhesive coating does not cover the longitudinal edge band portions 34 at edges of the underlayment.

Accordingly, in an ninth aspect of the invention, which may be based on any of the eighth through tenth aspects described above, the pressure sensitive adhesive layer 20 is coated partially onto the water vapor impermeable polymer layer 18 using a pattern chosen from Figs. 3 through 5, except that longitudinal edge bands 34 (e.g., one to six inches along the edges) of the underlayment membrane are left uncoated, such that a two-sided adhesive tape can be applied at the application site (or at the manufacturing plant before shipment of the product to customer or installation site) before attachment of the underlayment membrane to a floor.

Again, the present inventors prefer that the partial coating adhesive patterns shown at 31, 32, 33, 38, 39, and 40 be used without the continuous edge band coatings (in areas designated as at 34). Instead, applicators may apply two-sided adhesive tape to ensure that adjacent underlayment membranes are tightly seamed. The use of partial coating adhesive patterns (e.g., Figs. 3 to 5) on the large intermediate areas of the water vapor impermeable polymer layer 18 face avoids extra labor compared to the PRIOR ART box grid taping process shown in Fig. 1. Before unrolling and positioning the underlayment in place, applicators should apply to the floor a two-sided tape having a release liner attached to the top surface (not illustrated). When the underlayment (10) is positioned over installed two-sided tape, the tape should be parallel with the "longitudinal" (machine direction) of the underlayment, and the edge of the underlayment should be position above along the center of the tape. Thus, for underlayments that are six feet wide, the center of the tapes should also be located six feet apart. For seaming together two adjacent underlayment membranes, the release liner (i.e., a separate release liner on upward surface of the installed two-sided tape) should be kept on the tape until one or both underlayment edges are positioned on the center of the tape.

In a tenth aspect of the invention, which may be based on any of the first through ninth aspects described above, vapor impermeable flooring underlayments of the invention have a release liner 22 comprising silicone coated film or paper, and these could be made of polyethylene terephthalate, polypropylene, and paper. Thickness of the film or paper may be about 0.5 mils to 5 mils. Preferred film thickness is about 1 to 3 mils. In further exemplary embodiments, the underlayments may employ a split release liner (22).

In a eleventh aspect, the invention provides a method for installing a flooring underlayment (10) based on any of the first through twelfth aspects described above, comprising attaching the underlayment (10) to a floor, removing a release sheet (22) to expose the partial coating of pressure sensitive adhesive (20) and pressing the adhesive onto the floor. This can be accomplished without the need for using the laborious prior art box grid taping process described in the Background section.

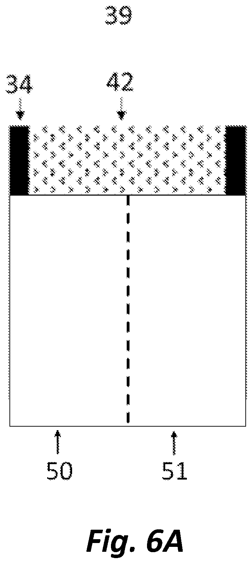

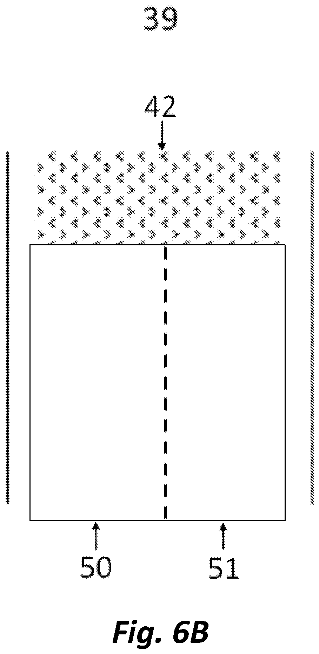

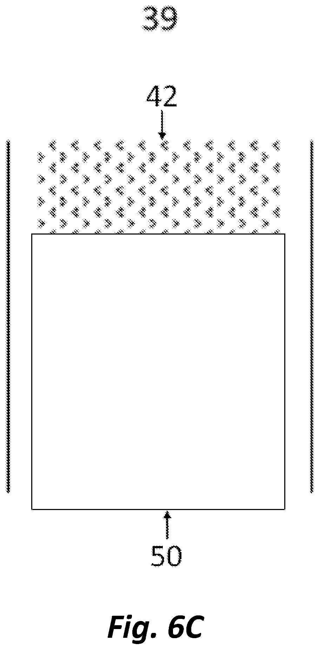

As shown in Fig. 6 and 6A, one side of the release liner (designated at 22 in Fig. 2) is divided into two sections that overlap slightly at center or are defined by perforations so that they can be split into two sections (designated at 50 and 51). A dual split release liner 50/51 can provide for easier application of underlayment. This application method is particularly advantageous when used with adhesive patterns where longitudinal strips 34 are already coated onto the vapor impermeable polymer layer 18. Once the underlayment is properly positioned, the split release liner 51 can be pulled from the adhesive layer at an angle (shown at 52 in Fig. 6), such that the adhesive is exposed and the underlayment can be attached by manual pressure directly onto the exposed face of the substrate in an accurate, fast, and convenient manner. The applicator removes the remaining split release liner 50 once a second underlayment is positioned next to the prior attached underlayment, so that an edge-to-edge fit is accomplished as between adjacently installed underlayment membranes.

Thus, in a twelfth aspect, the invention provides a method for installing a flooring underlayment based on the use of a split release liner as described above. This example comprises providing the flooring underlayment, removing a portion of the split release sheet along a first edge of the underlayment to expose a portion of the partial coated pressure sensitive adhesive layer and pressing the exposed partial coated pressure sensitive adhesive along the first underlayment edge onto a floor; and folding over the other edge of the underlayment, removing the other portion of the split release sheet along the other edge of the underlayment to expose a second portion of the partial coated pressure sensitive adhesive layer and pressing the exposed second portion of the partial coated pressure adhesive along the second underlayment edge onto a floor; the attachment of the underlayment to the floor being achieved without using a box grid adhesive tape pattern on the floor.

Alternatively, an underlayment membrane may be positioned where desired. With the release liner still attached, the underlayment is folded in half with the fold being parallel to the long axis/machine direction of the underlayment. However, applicators should take care to avoid creasing the underlayment. While in this gently folded position, one of the split portions of the release liner is removed; and the underlayment is gently rolled back into a flat position and adhered to the floor. The other side of the underlayment is then folded back gently to reveal the other (still attached) split release sheet, which is then removed, so that the underlayment can be gently rolled back into a flat position to be attached by the exposed adhesive to the floor.

The following application technique is for underlayments wherein the width of the adhesive is one to six inches narrower on each longitudinal edge of the underlayment compared to the width of the water vapor impermeable polymer layer 18 as shown in Fig. 6B. In this exemplary embodiment, the adhesive pattern can be chosen from the patterns illustrated at 31, 32, 33, 38, 39, and 40 (See Figs. 3-4) or the cascade pattern (See Fig. 5), but with adhesive strips 34 absent (i.e., not coated). Prior to attaching the underlayment membrane to the floor, a two-sided tape is first applied to the floor, corresponding to the location of the longitudinal edges of the underlayment. Thus, for underlayment membrane rolls that are five feet in width, the tapes will be placed five feet apart as measured from center to center. As the underlayment membrane is positioned over the two-side tape, the release liner on the upward surface of the tape remains attached to protect the adhesive. When the underlayment is finally positioned over the two-sided tape such that the edges of the underlayment are located approximately on the tape center, the underlayment is folded in half with the fold parallel to the long axis/machine direction of the underlayment (without creating a crease in the underlayment). While in this position, the release liner facing upwards on the folded underlayment is removed; and, thereafter, the underlayment is gently rolled back into a flat position and adhered to the floor. The other edge of the underlayment is then folded back in a similar fashion to reveal the still-attached second split release strip along the other edge of the underlayment, which is then removed. After removal of the second release liner strip, the underlayment is gently rolled back into a flat position and adhered to the floor. This process is repeated for an adjoining layer of underlayment. Next, the release liner on top of the tape between the adjoining edges of the 2 layers of membrane is removed and the adjoining edges of underlayment are adhered to the tape with the application of pressure.

While two-sided tape is used for the installation method above, the use of the partially coated adhesive 18 makes application of underlayments according to the present invention considerably faster compared to prior art taping methods as described in the Background section.

Moreover, when underlayment side edges (designated at 34 in Figs. 3-5) are left uncoated (i.e., not coated by the partial coating pressure sensitive adhesive 20), such that two-sided tapes on the floor to seam together adjacent underlayments at their side edges, this helps to avoid extra adhesive thickness at the underlayment edges and helps to provide uniform resistance to shear stresses in all directions across seamed underlayment edges.

Thus, in a thirteenth aspect, the invention provides a method comprising providing an underlayment based on any of the foregoing exemplary aspects, wherein the partial coated pressure sensitive adhesive layer 20 has a width that is less than the width of the vapor impermeable polymer layer 18, whereby a band portion of one to six inches along each longitudinal edge of the underlayment is not coated with pressure sensitive adhesive, whereby the method comprises: applying a two-sided pressure sensitive adhesive tape onto the floor corresponding to the edge of the underlayment 10; positioning the underlayment 10 along the tape on the floor and removing a portion of the split release sheet 22 along a first edge of the underlayment to expose a portion of the partial coated pressure sensitive adhesive layer 20 and pressing the exposed partial coated pressure sensitive adhesive 20 along the first underlayment edge onto a floor; and folding over the other edge of the underlayment, removing the other portion of the split release sheet 22 along the other edge of the underlayment to expose a second portion of the partial coated pressure sensitive adhesive layer 20 and pressing the exposed second portion of the partial coated pressure adhesive 20 along the second underlayment edge onto a floor. The attachment of the underlayment to the floor is thus be achieved without using the box grid adhesive taping process described in the Background section (See Fig. 1).

The following application technique may be advantageous for installing underlayments wherein the width of the partial coating pressure sensitive adhesive is less than width of the vapor impermeable polymer layer 18, such as where the adhesive layer is one to six inches narrower (as longitudinal edges are uncoated) compared to the polymer layer 18 width. Alternatively, when the release liner is not a split liner that can be separated or removed in sections (e.g., Fig. 6C), the underlayment membrane may be installed as follows: applying lengths of two-sided pressure sensitive adhesive tape to a floor, so to correspond with edges of the underlayment (e.g., parallel to each other with spacing equal to the width of the underlayment); positioning underlayments over the two-sided tape such that the edges of the underlayment are located approximately on the tape center; adhering uncoated edges of the underlayment to the two-sided tape by removing the releasable liner from the upward facing surface of the two-sided tape, thus anchoring the underlayment in position; folding back the full width of the underlayment to remove the releasable liner and expose a portion of the partially coated adhesive layer; rolling the underlayment onto the floor to attach it to the exposed tape adhesive, the second edge of the underlayment coinciding with the center of the next length of two-sided tape (with releasable liner still attached). A second underlayment is then positioned against the first (attached) underlayment so that edges of the underlayments are in contact, and a releasable liner of the two-sided tape under the two adjacent underlayment edges is removed, and both edges of the underlayments are pressed down to adhere to the tape adhesive. Further underlayments can be attached when the above process is repeated.

In a fourteenth aspect, the invention provides a method for making a vapor impermeable underlayment, which may be based on any of the components described in the first through twelfth aspects above. An exemplary method comprises providing a nonwoven layer (designated using the arrows at 14 in Fig. 2) having first and second sides, and coating a first side of the nonwoven layer 14 with a synthetic polymer binder coating 12 containing one or more fillers, and curing the filled synthetic polymer binder coating 12; forming a vapor impermeable polymer layer 18 on the second nonwoven layer 14 side by extrusion coating of a polymer (e.g., a polyolefin or blend of polyolefins) onto the nonwoven layer 14 or by laminating a preformed polymer film (e.g., polyolefin or blend of polyolefins) against the nonwoven layer 14; and thereafter attaching a partial coating layer of pressure sensitive adhesive or "PSA" 20 and release liner 22 to the second nonwoven layer 14 side, whereby the width of the partial PSA coating layer 20 is less than the width of the water vapor impermeable polymer layer 18.

A knife over roll, slot die, or roll coater process may be used to form (or to embed) the filled coating 12 on the nonwoven layer 14 (e.g., a fiberglass nonwoven fabric) using a continuous coating operation. The coated nonwoven layer 12/14 is placed in oven or heated zones to dry or cure the coating 12. The drying process, which will be a curing process if the coating requires a cross-linking agent, can be a single-pass, multiple-stage process. For example, the coated fabric 12/14 enters an oven to initiate the drying process at low temperature setting (e.g., 250 - 300 degrees F), depending on airflow and burner capacity. After the web (12/14) is dried, subsequent stages can employ higher temperature settings (e.g., 350-400 degrees F) until the polymer is fully cross-linked and cured. Such drying/curing ovens may be rather long and have multiple stages of burners with controlled temperature ranges. The resultant web 12/14 is fed onto a jumbo roll.

In the next manufacturing stage, the web comprising coating 12 and nonwoven fabric 14 is unwound. Where the water vapor impermeable polymer layer 18 is made using a preformed film (e.g., HOPE film), a slot die, roll coater, or other suitable coater may be used for applying a laminating adhesive 16 to the uncoated side of the nonwoven fabric 14. A polymer film 18 is then laminated to the laminating adhesive layer 16. This four-layer structure comprising the coating layer 12, nonwoven layer 14, laminating adhesive 16, and the polymer film 18 is wound into a jumbo roll.

Alternatively, the next manufacturing phase can involve the laminating adhesive 16 and polymer layer 18 being combined. In such a case, a thicker layer of 16 would be used to compensate for the absence of a separate polymer film or coating layer 18.

In a third step of the manufacturing process, the three- or four- layer structure comprising the coating layer 12, nonwoven layer 14, (optional laminating adhesive 16) and vapor impermeable polymer layer 18 is unwound; and thereafter a pressure sensitive adhesive layer 20 is partially coated onto the vapor impermeable polymer layer 18. The partial pressure sensitive adhesive layer 20 is then laminated to a release liner 22, which could be optionally split or perforated in the middle and wound into rolls. Alternatively, the pressure sensitive adhesive may be coated onto a release liner 22, and then laminated to the vapor impermeable polymer layer 18 of the laminate structure 12/14/16/18, and wound into rolls.

The type of coater used depends on the coating pattern. For coating patterns illustrated at 34, 35, and 36 in Fig. 3, a slot die coater or multiple slot die coater may be used. For adhesive coating patterns illustrated at 37, 41, and 42 in Fig. 4, a gravure roller type coater is suitable. For the partial coating adhesive pattern illustrated at 43 in Fig. 4, a spray type adhesive applicator is most suitable.

Finally, in a fifteenth aspect, the invention provides a flooring assembly which comprises floor made of concrete (or other porous construction or building material), the underlayment membrane according to any of the first through tenth aspects described above, a flooring adhesive, and a flooring wear course (e.g., tiles, carpet) placed over the underlayment. Preferably, the underlayment has partial coated pressure sensitive adhesive 20 having a width less than the width of the vapor impermeable polymer layer 18, whereby longitudinal bands along the edges of the underlayment are uncoated with adhesive 18, such that two-sided pressure sensitive adhesive tape is applied to the floor to correspond with the uncoated edge bands of the underlayment, which is attached to the flooring by the tape (thereby avoiding extra thickness of the underlayment assembly due to overlap of the tape and partial coated pressure adhesive layer).

The foregoing examples have been provided for illustrative purposes.

## Claims

1. A water vapor impermeable flooring underlayment membrane, comprising:
a water-vapor impermeable polymer layer having opposite first and second sides;
a coated non-woven layer attached to a first side of the water-vapor impermeable polymer layer,
wherein a coating layer of the coated non-woven layer comprises a synthetic polymer binder chosen from acrylics, acrylic vinyl chloride copolymers, polyvinyl chloride, polychloroprene, SBR, ethylene vinyl acetate, aqueous polyurethane emulsions, polyvinyl acetate, and mixtures thereof,
wherein the coating layer further comprises at least one filler chosen from calcium carbonate, fly ash, slag, ceramic spheres, glass spheres, alumina trihydrate, talc, amorphous silica, and mixtures thereof
and a pressure-sensitive adhesive layer attached on the second side of the water-vapor impermeable polymer layer, wherein the adhesive layer has open areas such that the membrane is partially adherable to a floor substrate and further wherein the adhesive layer is protected by a removable release liner.

2. The flooring underlayment membrane of claim 1 wherein (i) the coating layer is partially embedded into the non-woven layer and the top surface of the coating layer is located above the top surface of non-woven layer, or (ii) the coating layer is embedded beneath the top surface of the non-woven layer, or (iii) the top surface of the coating layer is flush with the top surface of the non-woven layer.

3. The flooring underlayment membrane of claim 1 wherein the top surface of the coating layer is flush with the top surface of the non-woven layer.

4. The flooring underlayment membrane of claim 1, wherein the water-vapor impermeable polymer layer comprises a material chosen from polyethylene, polypropylene, copolymers of ethylene and propylene, copolymers of ethylene and butene, copolymers of ethylene and hexene, copolymers of ethylene and octene, and mixtures thereof; and further wherein the water-vapor impermeable polymer layer has a thickness of no less than 12.7 micrometers (0.5 mils) and no greater than 254 micrometers (10.0 mils) preferably no less than 50.8 micrometers (2.0 mils) and no greater than 127 micrometers (5.0 mils).

5. The flooring underlayment membrane of claim 1, wherein the non-woven layer comprises a material chosen from glass, polyamide, polyethylene terephthalate fibers, or a combination of the foregoing materials.

6. The flooring underlayment membrane of claim 5, wherein the water-vapor impermeable polymer layer
is formed by extrusion coating onto the coated non-woven layer, or
is supplied in a pre-formed film that is laminated to the coated non-woven layer using a laminating adhesive that comprises a polymer chosen from polyethylene, polypropylene, copolymers of ethylene and propylene, copolymers of ethylene and butene, copolymers of ethylene and hexane, copolymers of ethylene and octene, ethylene vinyl acetate, ethylene acrylic acid, and mixtures thereof.

7. The flooring underlayment membrane of claim 5, wherein the pressure sensitive adhesive layer comprises a bituminous adhesive pressure sensitive adhesive or a non-bituminous synthetic pressure sensitive adhesive chosen from butyl rubber, polyisobutylene, acrylic, vinyl ether, styrene-isoprene-styrene (SIS), styrene-ethylene-butylene-styrene (SEBS), styrene-butadiene-styrene (SBS), styrene-butadiene rubber (SBR), and combinations thereof.

8. The flooring underlayment membrane of claim 7, wherein the pressure sensitive adhesive layer comprises at least one additive chosen from light absorbers, light stabilizers, antioxidants, fillers, plasticizers, rheological additives, and mixtures thereof.

9. The flooring underlayment membrane of claim 7, wherein the pressure sensitive adhesive layer is attached on the second side of the water-vapor impermeable polymer layer in a pattern chosen from a box grid pattern, a parallel stripe pattern, a crosshatch pattern, a diamond pattern, a discrete island pattern, a random fibrillary pattern, a cascade effect created by employing a puddle coating process, or a combination of any of the foregoing.

10. The flooring underlayment membrane of claim 9 wherein 2.54 cm to 15.24 cm (one to six inch) areas along the longitudinal edges of the underlayment membrane are devoid of pressure sensitive adhesive.

11. The flooring underlayment membrane of claim 10 wherein the removable release liner attached to the pressure sensitive adhesive layer is a removable split release sheet.

12. A method for attaching an underlayment, comprising providing the flooring underlayment of claim 1, removing the release liner, and pressing the pressure sensitive adhesive onto the floor substrate, without using a box grid adhesive tape pattern on the floor substrate.

13. A method for attaching an underlayment, comprising providing the flooring underlayment of claim 11, removing a portion of the split release sheet along a first edge of the underlayment to expose a portion of the pressure sensitive adhesive layer and pressing the exposed pressure sensitive adhesive along the first underlayment edge onto the floor substrate; and folding over the other edge of the underlayment, removing the other portion of the split release sheet along the other edge of the underlayment to expose a second portion of the pressure sensitive adhesive layer and pressing the exposed second portion of the pressure adhesive along the second underlayment edge onto the floor substrate; the attachment of the underlayment to the floor substrate being achieved without using a box grid adhesive tape pattern on the floor substrate.

14. The method of claim 13, wherein the pressure sensitive adhesive layer has a width that is less than the width of the vapor impermeable polymer layer, whereby a band portion of one to six inches along each longitudinal edge of the underlayment is not coated with pressure sensitive adhesive, whereby the method comprises: applying a two-sided pressure sensitive adhesive tape onto the floor substrate corresponding to the edge of the underlayment; positioning the underlayment along the two-sided pressure sensitive adhesive tape on the floor substrate and removing a portion of the split release sheet along a first edge of the underlayment to expose a portion of the partial coated pressure sensitive adhesive layer and pressing the exposed partial coated pressure sensitive adhesive along the first underlayment edge onto a floor; and folding over the other edge of the underlayment, removing the other portion of the split release sheet along the other edge of the underlayment to expose a second portion of the partial coated pressure sensitive adhesive layer and pressing the exposed second portion of the partial coated pressure adhesive along the second underlayment edge onto a floor.

15. A flooring assembly, comprising: a floor made of a porous material, the water vapor impermeable underlayment membrane according to claim 1, a flooring adhesive, and a flooring wear course placed over the underlayment.

## Patentansprüche

1. Wasserdampfundurchlässige Bodenbelagsunterlagsmembran, die umfasst:
eine wasserdampfundurchlässige Polymerschicht mit gegenüberliegenden ersten und zweiten Seiten;
eine beschichtete Vliesschicht, die an einer ersten Seite der wasserdampfundurchlässigen Polymerschicht befestigt ist,
wobei eine Beschichtungsschicht der beschichteten Vliesschicht ein synthetisches Polymerbindemittel umfasst, das aus Acryl, Acryl-Vinylchlorid-Copolymeren, Polyvinylchlorid, Polychloropren, SBR, Ethylen-Vinylacetat, wässrigen Polyurethanemulsionen, Polyvinylacetat und Gemischen davon ausgewählt ist,
wobei die Beschichtungsschicht mindestens einen Füllstoff umfasst, der aus Kalziumkarbonat, Flugasche, Schlacke, Keramikkugeln, Glaskugeln, Aluminiumoxidtrihydrat, Talk, amorphem Siliziumdioxid und Gemischen davon ausgewählt ist,
und eine druckempfindliche Klebstoffschicht, die auf der zweiten Seite der wasserdampfundurchlässigen Polymerschicht angebracht ist, wobei die Klebstoffschicht offene Bereiche aufweist, so dass die Membran teilweise an einem Bodensubstrat haften kann, und wobei die Klebstoffschicht ferner durch eine abnehmbare Trennschicht geschützt ist.

2. Bodenbelagsunterlagsmembran nach Anspruch 1 wobei (i) die Beschichtungsschicht teilweise in die Vliesschicht eingebettet ist und die Oberseite der Beschichtungsschicht sich über der Oberseite der Vliesschicht befindet, oder (ii) die Beschichtungsschicht unterhalb der oberen Oberfläche der Vliesschicht eingebettet ist, oder (iii) die obere Oberfläche der Beschichtungsschicht bündig mit der oberen Oberfläche der Vliesschicht ist.

3. Bodenbelagsunterlagsmembran nach Anspruch 1, wobei die Oberseite der Beschichtungsschicht mit der Oberseite der Vliesschicht bündig ist.

4. Bodenbelagsunterlagsmembran nach Anspruch 1, wobei die wasserdampfundurchlässige Polymerschicht ein Material umfasst, das ausgewählt ist aus Polyethylen, Polypropylen, Ethylen-Propylen-Copolymeren, Ethylen-Buten-Copolymeren, Ethylen-Hexen-Copolymeren, Ethylen-Octen-Copolymeren und Gemischen davon; und wobei ferner die wasserdampfundurchlässige Polymerschicht eine Dicke von nicht weniger als 12,7 Mikrometern (0,5 mils) und nicht mehr als 254 Mikrometern (10,0 mils), vorzugsweise nicht weniger als 50,8 Mikrometer (2,0 mils) und nicht mehr als 127 Mikrometer (5,0 mils) aufweist.

5. Bodenbelagsunterlagsmembran nach Anspruch 1, wobei die Vliesschicht ein Material umfasst, das aus Glas, Polyamid, Polyethylenterephthalatfasern oder einer Kombination der vorgenannten Materialien ausgewählt ist.

6. Bodenbelagsunterlagsmembran nach Anspruch 5, wobei die wasserdampfundurchlässige Polymerschicht
durch Extrusionsbeschichtung auf der beschichteten Vliesschicht gebildet wird, oder
in einer vorgeformten Folie geliefert wird, die mit der beschichteten Vliesschicht unter Verwendung eines Laminierklebstoffs laminiert wird, der ein Polymer umfasst, das ausgewählt ist aus Polyethylen, Polypropylen, Ethylen-Propylen-Copolymeren, Ethylen-Buten-Copolymeren, Ethylen-Hexan-Copolymeren, Ethylen-Octen-Copolymeren, Ethylen-Vinylacetat, Ethylen-Acrylsäure und Gemischen davon.

7. Bodenbelagsunterlagsmembran nach Anspruch 5, wobei die druckempfindliche Klebstoffschicht einen bituminösen druckempfindlichen Klebstoff oder einen nichtbituminösen synthetischen druckempfindlichen Klebstoff umfasst, der ausgewählt ist aus Butylkautschuk, Polyisobutylen, Acryl, Vinylether, Styrol-Isopren-Styrol (SIS), Styrol-Ethylen-Butylen-Styrol (SEBS), Styrol-Butadien-Styrol (SBS), Styrol-Butadien-Kautschuk (SBR) und Kombinationen davon.

8. Bodenbelagsunterlagsmembran nach Anspruch 7, wobei die druckempfindliche Klebstoffschicht mindestens ein Additiv umfasst, das aus Lichtabsorbern, Lichtstabilisatoren, Antioxidantien, Füllstoffen, Weichmachern, rheologischen Additiven und Gemischen davon ausgewählt ist.

9. Bodenbelagsunterlagsmembran nach Anspruch 7, wobei die druckempfindliche Klebstoffschicht auf der zweiten Seite der wasserdampfundurchlässigen Polymerschicht in einem Muster angebracht ist, das ausgewählt ist aus einem Kastengittermuster, einem parallelen Streifenmuster, einem Kreuzschraffurmuster, einem Rautenmuster, einem diskreten Inselmuster, einem zufälligen Fibrillenmuster, einem Kaskadeneffekt, der durch Anwendung eines Pfützenbeschichtungsverfahrens erzeugt wird, oder einer Kombination aus einem der Vorgenannten.

10. Bodenbelagsunterlagsmembran nach Anspruch 9, wobei 2,54 cm bis 15,24 cm (ein bis sechs Zoll) große Bereiche entlang der Längskanten der Unterlagsmembran frei von druckempfindlichem Klebstoff sind.

11. Bodenbelagsunterlagsmembran nach Anspruch 10, wobei die abnehmbare Trennschicht, die an der druckempfindlichen Klebstoffschicht befestigt ist, eine abnehmbare geteilte Trennfolie ist.

12. Verfahren zum Anbringen einer Unterlage, das das Bereitstellen der Bodenbelagsunterlage nach Anspruch 1, das Entfernen der Trennfolie und das Andrücken des druckempfindlichen Klebstoffs auf das Bodensubstrat, ohne ein Kastengitter-Klebebandmuster auf dem Bodensubstrat zu verwenden umfasst.

13. Verfahren zum Anbringen einer Unterlage, das Folgendes umfasst: Bereitstellen der Bodenbelagsunterlage nach Anspruch 11, Entfernen eines Abschnitts der geteilten Trennfolie entlang einer ersten Kante der Unterlage, um einen Abschnitt der druckempfindlichen Klebstoffschicht freizulegen, und Andrücken des freigelegten druckempfindlichen Klebstoffs entlang der ersten Kante der Unterlage auf das Bodensubstrat; und Umklappen der anderen Kante der Unterlage, Entfernen des anderen Abschnitts der geteilten Trennfolie entlang der anderen Kante der Unterlage, um einen zweiten Abschnitt der druckempfindlichen Klebstoffschicht freizulegen und Andrücken des freigelegten zweiten Abschnitts des Druckklebstoffs entlang der zweiten Kante der Unterlage auf den Bodenuntergrund; wobei die Befestigung der Unterlage auf dem Bodensubstrat ohne Verwendung eines Kastengitter-Klebebandmusters auf dem Bodensubstrat erreicht wird.

14. Verfahren nach Anspruch 13, wobei die druckempfindliche Klebeschicht eine Breite aufweist, die geringer ist als die Breite der dampfundurchlässigen Polymerschicht, wobei ein Abschnitt von einem bis sechs Zoll entlang jeder Längskante der Unterlage nicht mit druckempfindlichem Klebstoff beschichtet ist, wobei das Verfahren Folgendes umfasst: Aufbringen eines zweiseitigen druckempfindlichen Klebebandes auf das Bodensubstrat entsprechend der Kante der Unterlage; Positionieren der Unterlage entlang des zweiseitigen druckempfindlichen Klebebandes auf dem Bodensubstrat und Entfernen eines Abschnitts der geteilten Trennfolie entlang einer ersten Kante der Unterlage, um einen Abschnitt der partiell beschichteten druckempfindlichen Klebstoffschicht freizulegen, und Andrücken des freigelegten partiell beschichteten druckempfindlichen Klebstoffs entlang der ersten Kante der Unterlage auf einen Boden; und Umklappen der anderen Kante der Unterlage, Entfernen des anderen Abschnitts der geteilten Trennfolie entlang der anderen Kante der Unterlage, um einen zweiten Abschnitt der partiell beschichteten druckempfindlichen Klebstoffschicht freizulegen und Andrücken des freigelegten zweiten Abschnitts des partiell beschichteten Druckklebstoffs entlang der zweiten Kante der Unterlage auf einen Boden.

15. Bodenbelagsanordnung, die umfasst: einen Boden aus einem porösen Material, die wasserdampfundurchlässige Unterlagsmembran nach Anspruch 1, einen Bodenklebstoff und eine über der Unterlagsschicht angeordnete Bodenabnutzungsschicht.

## Revendications

1. Membrane de sous-couche de revêtement de sol imperméable à la vapeur d'eau, comprenant :
une couche de polymère imperméable à la vapeur d'eau ayant des première et deuxième faces opposées ;
une couche de non-tissé revêtue fixée sur une première face de la couche de polymère imperméable à la vapeur d'eau,
dans laquelle une couche de revêtement de la couche de non-tissé revêtue comprend un liant de polymère synthétique choisi parmi les acryliques, les copolymères acrylique-chlorure de vinyle, le polychlorure de vinyle, le polychloroprène, le SBR, l'éthylène-acétate de vinyle, les émulsions aqueuses de polyuréthane, le polyacétate de vinyle, et des mélanges de ceux-ci,
dans laquelle la couche de revêtement comprend en outre au moins une charge choisie parmi le carbonate de calcium, les cendres volantes, les scories, les sphères céramiques, les sphères de verre, l'alumine trihydratée, le talc, la silice amorphe, et des mélanges de ceux-ci
et une couche adhésive sensible à la pression fixée sur la deuxième face de la couche de polymère imperméable à la vapeur d'eau, dans laquelle la couche adhésive présente des zones ouvertes de sorte que la membrane peut adhérer partiellement à un substrat de sol et en outre dans laquelle la couche adhésive est protégée par une doublure de séparation amovible.

2. Membrane de sous-couche de revêtement de sol selon la revendication 1 dans laquelle (i) la couche de revêtement est partiellement intégrée dans la couche de non-tissé et la surface supérieure de la couche de revêtement est située au-dessus de la surface supérieure de la couche de non-tissé, ou (ii) la couche de revêtement est intégrée sous la surface supérieure de la couche de non-tissé, ou (iii) la surface supérieure de la couche de revêtement est de niveau avec la surface supérieure de la couche de non-tissé.

3. Membrane de sous-couche de revêtement de sol selon la revendication 1 dans laquelle la surface supérieure de la couche de revêtement est de niveau avec la surface supérieure de la couche de non-tissé.

4. Membrane de sous-couche de revêtement de sol selon la revendication 1, dans laquelle la couche de polymère imperméable à la vapeur d'eau comprend un matériau choisi parmi le polyéthylène, le polypropylène, les copolymères d'éthylène et de propylène, les copolymères d'éthylène et de butène, les copolymères d'éthylène et d'hexène, les copolymères d'éthylène et d'octène, et des mélanges de ceux-ci ; et en outre dans laquelle la couche de polymère imperméable à la vapeur d'eau a une épaisseur non inférieure à 12,7 micromètres (0,5 mil) et non supérieure à 254 micromètres (10,0 mils), de préférence non inférieure à 50,8 micromètres (2,0 mils) et non supérieure à 127 micromètres (5,0 mils).

5. Membrane de sous-couche de revêtement de sol selon la revendication 1, dans laquelle la couche de non-tissé comprend un matériau choisi parmi le verre, le polyamide, les fibres de polytéréphtalate d'éthylène, ou une combinaison des matériaux précités.

6. Membrane de sous-couche de revêtement de sol selon la revendication 5, dans laquelle la couche de polymère imperméable à la vapeur d'eau
est formée par revêtement par extrusion sur la couche de non-tissé revêtue, ou
est fournie sous forme de film préformé qui est stratifié sur la couche de non-tissé revêtue à l'aide d'un adhésif de stratification qui comprend un polymère choisi parmi le polyéthylène, le polypropylène, les copolymères d'éthylène et de propylène, les copolymères d'éthylène et de butène, les copolymères d'éthylène et d'hexane, les copolymères d'éthylène et d'octène, l'éthylène-acétate de vinyle, l'éthylène-acide acrylique, et des mélanges de ceux-ci.

7. Membrane de sous-couche de revêtement de sol selon la revendication 5, dans laquelle la couche adhésive sensible à la pression comprend un adhésif sensible à la pression bitumineux ou un adhésif sensible à la pression synthétique non bitumineux choisi parmi le caoutchouc butyle, le polyisobutylène, l'acrylique, l'éther vinylique, le styrène-isoprène-styrène (SIS), le styrène-éthylène-butylène-styrène (SEBS), le styrène-butadiène-styrène (SBS), le caoutchouc styrène-butadiène (SBR), et des combinaisons de ceux-ci.

8. Membrane de sous-couche de revêtement de sol selon la revendication 7, dans laquelle la couche adhésive sensible à la pression comprend au moins un additif choisi parmi les photo-absorbants, les photostabilisants, les antioxydants, les charges, les plastifiants, les additifs rhéologiques, et des mélanges de ceux-ci.

9. Membrane de sous-couche de revêtement de sol selon la revendication 7, dans laquelle la couche adhésive sensible à la pression est fixée sur la deuxième face de la couche de polymère imperméable à la vapeur d'eau selon un motif choisi parmi un motif de quadrillage, un motif de bandes parallèles, un motif de hachures croisées, un motif de losange, un motif d'îlots distincts, un motif fibrillaire aléatoire, un effet de cascade créé par l'utilisation d'un processus de dépôt à la flaque, ou une combinaison de l'un quelconque des éléments précités.

10. Membrane de sous-couche de revêtement de sol selon la revendication 9 dans laquelle des zones de 2,54 cm à 15,24 cm (un à six pouces) le long des bords longitudinaux de la membrane de sous-couche sont dépourvues d'adhésif sensible à la pression.

11. Membrane de sous-couche de revêtement de sol selon la revendication 10 dans laquelle la doublure de séparation amovible fixée à la couche adhésive sensible à la pression est une feuille de séparation divisée amovible.

12. Procédé de fixation d'une sous-couche, comprenant la fourniture de la sous-couche de revêtement de sol de la revendication 1, le retrait de la doublure de séparation, et le pressage de l'adhésif sensible à la pression sur le substrat de sol, sans utiliser de motif de ruban adhésif en quadrillage sur le substrat de sol.

13. Procédé de fixation d'une sous-couche, comprenant la fourniture de la sous-couche de de revêtement de sol de la revendication 11, le retrait d'une portion de la feuille de séparation divisée le long d'un premier bord de la sous-couche pour exposer une portion de la couche adhésive sensible à la pression et le pressage de l'adhésif sensible à la pression exposé le long du premier bord de sous-couche sur le substrat de sol ; et en repliant l'autre bord de la sous-couche, le retrait de l'autre portion de la feuille de séparation divisée le long de l'autre bord de la sous-couche pour exposer une deuxième portion de la couche adhésive sensible à la pression et le pressage de la deuxième portion exposée de l'adhésif sensible à la pression le long du deuxième bord de sous-couche sur le substrat de sol ; la fixation de la sous-couche sur le substrat de sol étant réalisée sans utiliser de motif de ruban adhésif en quadrillage sur le substrat de sol.

14. Procédé selon la revendication 13, dans lequel la couche adhésive sensible à la pression a une largeur qui est inférieure à la largeur de la couche de polymère imperméable à la vapeur, de sorte qu'une portion de bande d'un à six pouces le long de chaque bord longitudinal de la sous-couche n'est pas revêtue d'adhésif sensible à la pression, moyennant quoi le procédé comprend : l'application d'un ruban adhésif sensible à la pression double face sur le substrat de sol correspondant au bord de la sous-couche ; le positionnement de la sous-couche le long du ruban adhésif sensible à la pression double face sur le substrat de sol et le retrait d'une portion de la feuille de séparation divisée le long d'un premier bord de la sous-couche pour exposer une portion de la couche adhésive sensible à la pression partiellement revêtue et le pressage de l'adhésif sensible à la pression partiellement revêtu exposé le long du premier bord de sous-couche sur un sol ; et en repliant l'autre bord de la sous-couche, le retrait de l'autre portion de la feuille de séparation divisée le long de l'autre bord de la sous-couche pour exposer une deuxième portion de la couche adhésive sensible à la pression partiellement revêtue et le pressage de la deuxième portion exposée de l'adhésif sensible à la pression partiellement revêtu le long du deuxième bord de sous-couche sur un sol.

15. Assemblage de revêtement de sol, comprenant : un sol fait d'un matériau poreux, la membrane de sous-couche imperméable à la vapeur d'eau selon la revendication 1, un adhésif de revêtement de sol, et une couche d'usure de revêtement de sol placée par-dessus la sous-couche.
